# EUROPEAN PATENT SPECIFICATION

(11) **EP 4 102 727 B1**
(45) Date of publication and mention of the grant of the patent: **25.03.2026**
(21) Application number: 21196756.7
(22) Date of filing: 15.09.2021
(51) Int. Cl.: H04B 1/44, H04L 5/14, H04W 72/04

(54) **METHOD, REMOTE DEVICE, AND SYSTEM FOR TRANSMISION COMPATIBLE WITH TWO TDD SWITCH SIGNALS**
VERFAHREN, ENTFERNTE VORRICHTUNG UND SYSTEM FÜR MIT ZWEI TDD-SCHALTERSIGNALEN KOMPATIBLE ÜBERTRAGUNG
PROCÉDÉ, DISPOSITIF DISTANT ET SYSTÈME DE TRANSMISSION COMPATIBLES AVEC DEUX SIGNAUX DE COMMUTATION TDD

(30) Priority: 11.06.2021 CN 202110652959
(43) Date of publication of application: 14.12.2022
(73) Proprietor: PROSE Technologies (Suzhou) Co., Ltd., Suzhou, Jiangsu 215345 (CN)
(72) Inventor: LIU, Jing, Jiangsu, 215345 (CN); YANG, Wei, Jiangsu, 215345 (CN); ZHANG, Hang, Jiangsu, 215345 (CN)
(74) Representative: Dennemeyer & Associates S.A.

(56) References cited:
- CN-A- 112 532 333
- US-A1- 2009 318 089
- US-A1- 2020 137 709
- US-A1- 2020 322 811

## Description

### FIELD OF THE DISCLOSURE

The present disclosure relates to signal transmission technology, in particular to a method which is compatible with transmission of two time division duplex, TDD, switch signals, a system, and a remote device.

### BACKGROUND

In a simulated indoor distributed system, the synchronization of uplink and downlink time division duplex (TDD) switching time will affect the interference suppression capability of the system and the flexibility of the system to support uplink and downlink asymmetric services, thereby affecting other performances of the system. In the simulated indoor distributed system of TDD mode, receiving and sending are performed in different time slots of the same frequency channel (that is, the carrier), and the receiving and sending channels are separated using time. With the increasing demands of users' business capabilities, the signal demands of TDD mode are increasing, and the accuracy requirement of switching of the device standard is also increasing. The TDD switch signal in the general simulated indoor distributed system requires the near-end device to transmit two synchronization signal frame headers of a first signal (for example, 4G signal) and a second signal (for example, 5G signal) through two optical ports respectively to the remote device, the lower computer demodulates the time slot ratio of the synchronization modules and sends it to the remote device, the remote device recovers the respective uplink and downlink switching switch signals according to the time slot ratio provided by the lower computer and the received two synchronization signal frame headers.

It can be seen that the existing uplink and downlink TDD switch signal transmission technology verifies the generated signal according to the configured parameters, calculates the error of the switch signal after the verification is successful, and performs compensation on the new generated switch signal. At the same time, after the parameter configuration is completed, the frame header is recognized according to the configured communication standard and the internal time slot ratio setting, and the pulse signal in the time slot is filtered out. That is, when performing verification, it should be known that the configured time slot ratio, the cycle threshold, as well as the cycle of the currently given cycle synchronization signal, that is, the amount of inputs required is relatively large, the implementation of the design is more complicated; and the frame header needs to be recognized to filter out the pulse signal and then compensate and calibrate, whose design is more cumbersome. Therefore, the existing uplink and downlink TDD switch signal transmission technology increases the optical fiber resources and the complexity of the system, and increases the device cost.

US 2020/137709 A1 discloses a method of detecting a synchronization switching pulse using a power detector in a time division duplexing (TDD) system, including receiving an input signal, detecting a power level associated with the input signal using a digital power meter, and determining a configuration associated with the input signal.

US 2020/322811 A1 discloses a method of operating a repeater which comprises detecting a synchronization signal from a received communication signal, identifying a time division duplex (TDD) switching pattern based on a power change of the communication signal over time and switching an uplink operation and a downlink operation of the repeater based on the detected synchronization signal and the TDD switching pattern.

CN 112 532 333 A discloses a signal synchronization method and a device, a light distribution system and a storage medium.

US 2009/318089 A1 discloses a method of switching a communication device between an uplink communication path and a downlink communication path.

### SUMMARY

With respect to the above problems, the present disclosure proposes a remote device, a system and a method which is compatible with transmission of two time division duplex, TDD, switch signals, as defined in the appended set of claims.

The method, the remote device, and the system according to the present disclosure can simplify the structure of the system for TDD switch signal transmission, save fiber resources, and reduce system costs.

### BRIEF DESCRIPTION OF THE DRAWINGS

With reference to the following detailed description and in conjunction with the accompanying drawings, the features, advantages, and other aspects of the embodiments of the present disclosure will become more apparent, several embodiments of the present disclosure are shown by way of example but not limitation here, in the drawing:
FIG. 1 is an overall structure view of a system for transmission compatible with two TDD switch signals according to the present disclosure;
FIG. 2 is an overall flow chart of a method for transmission compatible with two TDD switch signals according to the present disclosure;
FIG. 3 is a flowchart of the power-on detection of the method for transmission compatible with two TDD switch signals according to the present disclosure; and
FIG. 4 shows the input and output waveforms of the second downlink switch signal in the system for transmission compatible with two TDD switch signals according to the present disclosure.

### DETAILED DESCRIPTION

In the detailed description of the following preferred embodiments, the reference will be made to the accompanying drawings constituting a part of the present invention. The appended drawings show specific embodiments capable of implementing the present invention by way of example. The exemplary embodiments are not intended to be exhaustive of all embodiments according to the present invention. It can be understood that other embodiments can be used, and structural or logical modifications can also be made without departing from the scope of the present invention. Therefore, the following detailed description is not restrictive, and the scope of the present invention is defined by the appended claims.

The terms "comprising", "including" and similar terms used herein should be understood as open-ended terms, that is, "comprising/including but not limited to", which means that other content may also be included. The term "based on" is "based at least in part on" . The term "one embodiment" means "at least one embodiment"; the term "another embodiment" means "at least one another embodiment", and so on.

The technologies, methods, and devices known to those of ordinary skill in the relevant art may not be discussed in detail, but where appropriate, the technologies, methods, and devices should be regarded as part of the specification. The connection between the units in the drawings is only for convenience of description, which means that at least the units at both ends of the connection communicate with each other, and it is not intended to limit the communication between unconnected units.

The technical problem to be solved by the present invention is how to improve the accuracy of the switching switch signal output when the demands for TDD mode signals become increasingly.

To solve the above technical problem, the system for transmission compatible with two TDD switch signals disclosed herein comprises a near-end device and a remote device. The near-end device is to send a downlink TDD switch signal to the remote device. The remote device is to receive the downlink TDD switch signal, and perform a power-on detection on the downlink TDD switch signal; in the case of a successful power-on detection, generate a standard switch signal corresponding to the downlink TDD switch signal; compare the downlink TDD switch signal with the standard switch signal; in the case that the number of abnormal values between the downlink TDD switch signal and the standard switch signal is less than the set value N, output a first downlink switching switch signal, a first uplink switching switch signal, a second downlink switching switch signal, and a second uplink switching switch signal related to the downlink TDD switch signal.

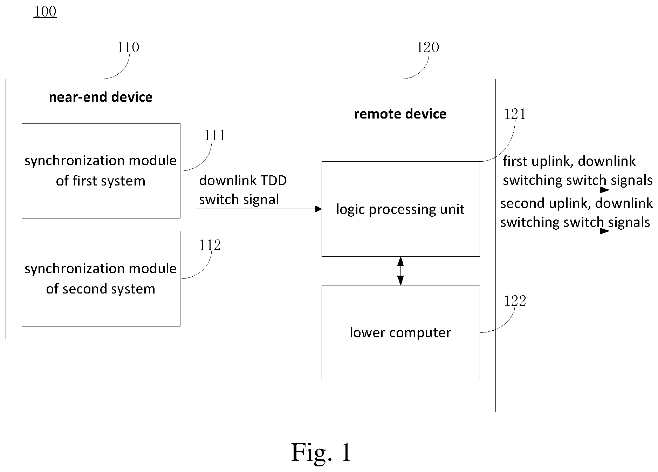

The system, the remote device, and the method for transmission compatible with two TDD switch signals are described according to FIGS. 1 to 4 and related embodiments.

As shown in FIG. 1, a system 100 for transmission compatible with two TDD switch signals comprises a near-end device 110 and a remote device 120. Specifically, the near-end device 110 includes a synchronization module 111 of a first system and a synchronization module 112 of a second system; the remote device 120 includes a logic processing unit 121 and a lower computer 122.

In this embodiment, the first downlink switch signal generated by the synchronization module 111 of the first system and the second downlink switch signal generated by the synchronization module 112 of the second system are processed via the near-end device 110 to output a downlink TDD switch signal, wherein the downlink TDD switch signal includes a first downlink switch signal and a second downlink switch signal. Specifically, the near-end device 110 transmits the first downlink switch signal and the second downlink switch signal to the remote device 120 in a time division manner through an optical fiber interface.

In this embodiment, the first downlink switch signal is optionally a 4G downlink switch signal or other type of downlink switch signal, and the second downlink switch signal is optionally a 5G downlink switch signal or other type of downlink switch signal.

The remote device 120 receives and detects the downlink TDD switch signal, and then outputs the first downlink switching switch signal, the first uplink switching switch signal, the second downlink switching switch signal, and the second uplink switching switch signal related to the downlink TDD switch signal respectively. As a result, it is possible to realize the transmission compatible with two TDD switch signals and the output of the uplink and downlink switching switch signals.

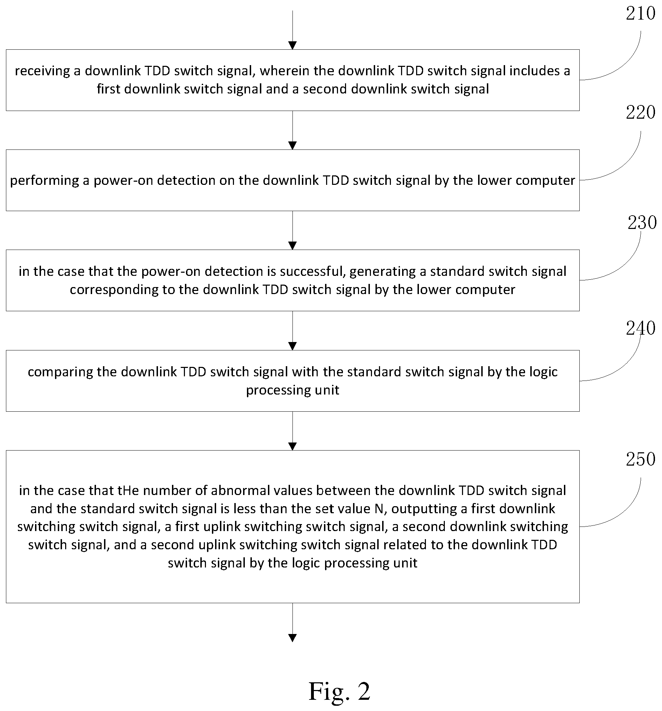

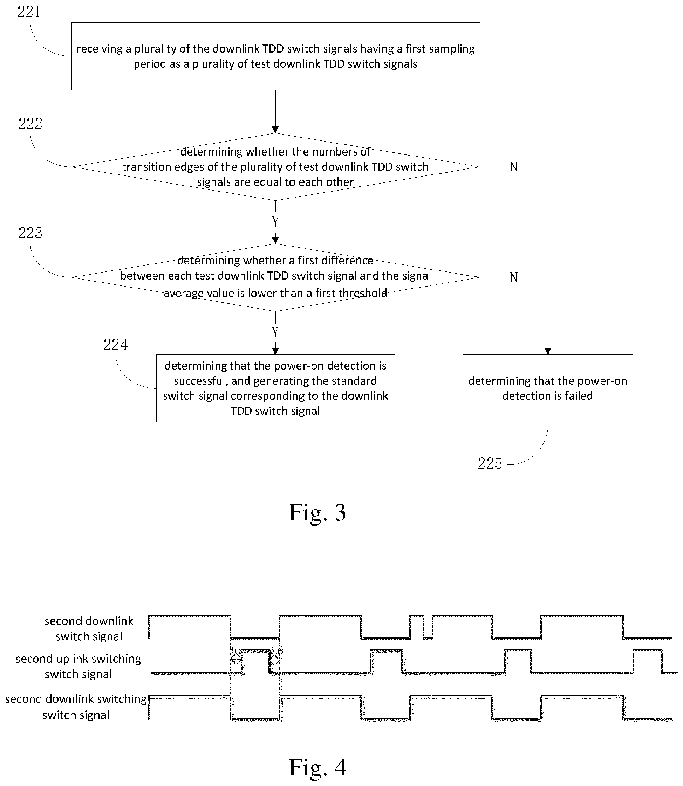

In this embodiment, the remote device 120 implements the method for transmission compatible with two TDD switch signals as shown in FIG. 2 and FIG. 3 to realize the above-mentioned functions.

Step 210: the logic processing unit 121 of the remote device 120 receives the aforementioned downlink TDD switch signal.

Specifically, when the logic processing unit 121 detects a first valid switch signal rising edge of the downlink TDD switch signal, the counter (for example, T_{count}=10ms) starts to count circularly, the system clock period is Ts, and the clock jitter is Δ, the counter is cleared upon counting to 10ms/Ts±Δ.

Due to different time slot ratios, the 10ms radio frame in this embodiment may have a frame with a 5ms period, a frame with a 2.5ms period, etc., the number of transition edges can be determined by the logic processing unit 121, and the present invention can support various time slot ratio schemes. The counter counts the number of transition edges in each cycle counting period (for example, T_{count}=10ms). The logic processing unit 121 obtains all the high-level lengths and low-level lengths within 10 ms by latching the value of the counter.

The logic processing unit 121 outputs an interrupt signal to the lower computer 122 every cycle counting period, and the lower computer 122 obtains the downlink TDD switch signal in a first sampling period received by the logic processing unit 121 after receiving the interrupt signal (T_{1st sampling period} = 10ms).

Step 220: the lower computer 122 performs a power-on detection on the downlink TDD switch signal. As shown in FIG. 3, this step specifically comprises the following:
Step 221: the lower computer 122 receives a plurality of the downlink TDD switch signals in a first sampling period as a plurality of test downlink TDD switch signals.

Specifically, the lower computer 122 receives k downlink TDD switch signals in the first sampling period as k test downlink TDD switch signals.

Step 222: the lower computer 122 determines whether the numbers of transition edges of the plurality of test downlink TDD switch signals are equal to each other, and in the case that the numbers of transition edges are equal, generates a signal average value of the plurality of test downlink TDD switch signals.

In this embodiment, the lower computer 122 determines whether the numbers of transition edges of the k test downlink TDD switch signals are equal to each other, and in the case that the numbers of transition edges are equal, generates the signal average value of the k test downlink TDD switch signals.

In this embodiment, each test downlink TDD switch signal includes several high-levels and several low-levels, and the signal average value is a set of average values of all high-levels and low-levels in corresponding positions of the k test downlink TDD switch signals.

Step 223: the lower computer 122 determines whether a first difference between each test downlink TDD switch signal and the signal average value is lower than a first threshold.

Specifically, the lower computer 122 determines whether the first difference between each test downlink TDD switch signals of the k test downlink TDD switch signals and the aforementioned signal average value is lower than the first threshold.

Step 224: in the case that the first difference between each test downlink TDD switch signal and the signal average value is lower than the first threshold, the lower computer 122 determines that the power-on detection is successful.

In addition, as shown in step 225 of FIG. 3, in the case that in step 222, the lower computer 122 determines that the numbers of transition edges are not equal to each other or the first difference between any test downlink TDD switch signal and the signal average value is not lower than the first threshold, the lower computer 122 determines that the power-on detection is failed.

In this embodiment, when the logic processing unit 121 receives the power-on detection failure signal sent by the lower computer 122, the logic processing unit 121 continues to send an interrupt signal and the test downlink TDD switch signal to the lower computer 122; if the lower computer 122 has not sent the information indicating the successful power-on detection to the logic processing unit 121 for a long time, the logic processing unit 121 determines that the synchronization module 111 of the first system and/or the synchronization module 112 of the second system are failed, and the power-on detection process is performed again after the synchronization module 111 of the first system and/or the synchronization module 112 of the second system are synchronized normally.

Step 230: in the case that the power-on detection is successful, the lower computer 122 generates a standard switch signal corresponding to the downlink TDD switch signal, and sends the standard switch signal to the logic processing unit 121.

In this step, the lower computer 122 sends a power-on detection success signal to the logic processing unit 121, so that the logic processing unit 121 stops outputting the interrupt signal; meanwhile the lower computer 122 sends the standard switch signal to the logic processing unit 121.

In this embodiment, the lower computer 122 uses the signal average value as the standard switch signal.

Next, the logic processing unit 121 synchronously outputs the downlink TDD switch signal, specifically as follows:
Step 240: the logic processing unit 121 compares the downlink TDD switch signal with the standard switch signal;
In this step, the logic processing unit 121 receives the information of the successful power-on detection and the standard switch signal;
First, the logic processing unit 121 determines whether the number of all transition edges of the downlink TDD switch signal in the second sampling period (T_{2nd sampling period}=10 ms) is equal to the number of all transition edges of the standard switch signal, if not, records that there is one abnormal value in the downlink TDD switch signal. The second sampling period and the first sampling period have the same duration. In this embodiment, T_{1st sampling} period = T_{2nd sampling period} = 10 ms.

Second, the logic processing unit 121 determines whether a plurality of second differences between each high-level and each low-level of the downlink TDD switch signal in the second sampling period and the corresponding high-level and low-level of the standard switch signal exceed a second threshold value, if a second difference exceeds the second threshold value, records that there is one abnormal value in the downlink TDD switch signal.

Specifically, when a difference (that is, the second difference) between any high-level of the downlink TDD switch signal in the second sampling period and the corresponding high-level of the standard switch signal exceeds the second threshold, an abnormal value is recorded; alternatively, when a difference (that is, the second difference) between any low-level of the downlink TDD switch signal in the second sampling period and the corresponding low-level of the standard switch signal exceeds the second threshold, and then another abnormal value is recorded.

Step 250: in the case that the number of abnormal values between the downlink TDD switch signal and the standard switch signal is less than the set value N, the logic processing unit 121 outputs a first downlink switching switch signal, a first uplink switching switch signal, a second downlink switching switch signal, and a second uplink switching switch signal related to the downlink TDD switch signal. Step 250 is specifically as follows:
When the number of abnormal values between the downlink TDD switch signal and the standard switch signal is zero, the downlink TDD switch signal is directly output as the downlink switching switch signal.

Alternatively, when the number of abnormal values between the downlink TDD switch signal and the standard switch signal is less than the set value N, the standard switch signal instead of the downlink TDD switch signal which generates abnormal value(s) is output as the downlink switching switch signal.

The logic processing unit 121 first recovers an uplink switching switch signal according to the downlink switching switch signal; then performs operations of turning-on delay and turning-off in advance on the output of the uplink switching switch signal and the corresponding downlink switch signal.

In the present invention, to prevent the uplink and downlink switching switch signals from being turned on simultaneously to form interferences, the approach of turning-off before turning-on is adopted near the uplink-downlink switching point. At the switching point from the end of the downlink time slot to the beginning of the uplink time slot, the downlink switching switch signal is turned off in advance and then the uplink time slot switching switch signal is turned on after a period of delay. At the switching point from the end of the uplink time slot to the beginning of the downlink time slot, the uplink switching switch signal is turned off in advance, and then the downlink time slot switching switch signal is turned on after a period of delay.

For example, as shown in FIG. 4, in this embodiment, it is shown that in the case that the number of abnormal values between the downlink TDD switch signal and the standard switch signal is zero, the downlink TDD switch signal is output as the downlink switching switch signal directly. That is, the logic processing unit 121 can recover the second uplink switching switch signal according to the second downlink switching switch signal, and output the second uplink switching switch signal by way of turning-on delayed for 3 us and turning-off in advance for 3 us following the 3GPP standard according to the 10ms switch signal switching information provided by the lower computer 122, to achieve the noninterference between the uplink and downlink switching switch signals.

In the case that the downlink TDD switch signal further includes an identification signal, the logic processing unit 121 outputs the first downlink switching switch signal and the second downlink switching switch signal of the downlink switching switch signal distinguishingly according to the identification signal.

Alternatively, in the case that the identification signal includes a first identification signal and a second identification signal, the logic processing unit 121 outputs the first downlink switching switch signal and the second downlink switching switch signal of the downlink switching switch signal distinguishingly according to the first identification signal and the second identification signal.

In addition, when the number of abnormal values between the downlink TDD switch signal and the standard switch signal is greater than or equal to the set value N, the logic processing unit 121 sends an abnormal warning to the lower computer 122.

The technical solution disclosed in the present invention can transmit a downlink TDD switch signal including a first downlink switch signal and a second downlink switch signal, and achieve the transmission for compatible with two TDD switch signals by the power-on detection, outputting the first downlink switching switch signal, the first uplink switching switch signal, the second downlink switching switch signal, and the second uplink switching switch signal synchronously. Further, by introducing the operation of relatively turning-on delay and turning-off in advance of the output of the uplink switching switch signal and the corresponding downlink switching switch signal, the uplink and downlink switching switch signals will not be turned on synchronously and will not interfere with each other. In addition, the error correction function of the switch signal is achieved using the comparison between the high-level length and the low-level length of the switch signal and the threshold value in real time and the calibration of the switch signal.

It should be noted that although several assemblies or sub-assemblies of the device are mentioned in the above detailed description, this division is only exemplary and not mandatory. In fact, according to the embodiments of the present disclosure, the features and functions of two or more assemblies described above may be embodied in one assembly. Conversely, the features and functions of one device described above can be further divided into multiple assemblies to be embodied.

The above are only optional embodiments of the embodiments of the present disclosure, and are not used to limit the embodiments of the present disclosure. The invention is only defined by the appended claims.

## Claims

1. A remote device (120) which is compatible with transmission of two time division duplex, TDD, switch signals, the remote device (120) comprising: a logic processing unit (121) and a slave computer (122),
the logic processing unit (121) being configured to receive a downlink TDD switch signal, wherein the downlink TDD switch signal comprises a first downlink switch signal and a second downlink switch signal, wherein a type of the first downlink switch signal is different from a type of the second downlink switch signal;
the slave computer (122) being configured to:
perform a power-on detection on the downlink TDD switch signal;
in the case of a successful power-on detection, generate a standard switch signal corresponding to the downlink TDD switch signal;
the logic processing unit (121) being further configured to:
receive information indicating the successful power-on detection and the standard switch signal;
compare the downlink TDD switch signal with the standard switch signal;
in the case that the number of abnormal values between the downlink TDD switch signal and the standard switch signal is less than a set value N, output a first downlink switching signal and a first uplink switching signal, a second downlink switching signal, and a second uplink switching signal related to the downlink TDD switch signal,
wherein the slave computer is further configured to:
receive a plurality of the downlink TDD switch signals in a first sampling period as a plurality of test downlink TDD switch signals;
determine whether numbers of transition edges of the plurality of test downlink TDD switch signals are equal to each other, and in the case that the numbers of transition edges are equal, generate a signal average value of the plurality of test downlink TDD switch signals, wherein each test downlink TDD switch signal comprises several high-levels and several low-levels, and the signal average value is a set of average values of all high-levels and low-levels in corresponding positions of the plurality of test downlink TDD switch signals;
determine whether a first difference between each test downlink TDD switch signal and the signal average value is lower than a first threshold;
in the case that each first difference between each test downlink TDD switch signal and the signal average value is lower than the first threshold, determine that the power-on detection is successful,
wherein if the power-on detection is successful, the slave computer is further configured to:
use the signal average value as the standard switch signal,
wherein the logic processing unit is further configured to:
determine whether a number of all transition edges of the downlink TDD switch signal in a second sampling period is equal to a number of all transition edges of the standard switch signal, and if not, record that there is one abnormal value in the downlink TDD switch signal, wherein the second sampling period and the first sampling period have a same duration;
determine whether a plurality of second differences between each high-level and each low-level of the downlink TDD switch signal in the second sampling period and the corresponding high-level and low-level of the standard switch signal exceed a second threshold value, if the second difference exceeds the second threshold value, record that there is one abnormal value in the downlink TDD switch signal.

2. The remote device according to claim 1, wherein the logic processing unit is further configured to:
in the case that the number of abnormal values between the downlink TDD switch signal and the standard switch signal is zero, directly output the downlink TDD switch signal as a downlink switching signal; or
in the case that the number of abnormal values between the downlink TDD switch signal and the standard switch signal is not zero, but less than the set value N, output the standard switch signal as the downlink switching signal.

3. The remote device according to claim 2, wherein the logic processing unit is further configured to:
recover an uplink switching signal according to the downlink switching signal;
perform operations of a delayed turning-on and a prior turning-off on outputs of the uplink switching signal and the corresponding downlink switching signal.

4. The remote device according to claim 3, wherein the logic processing unit is further configured to:
in the case that the downlink TDD switch signal further comprises an identification signal, output the first downlink switching signal and the second downlink switching signal of the downlink switching signal distinguishingly according to the identification signal.

5. A system for transmission compatible with two time division duplex, TDD, switch signals, the system comprising:
a remote device (120) according to any of claims 1-4; and
a near-end device (110) sending a downlink TDD switch signal to the remote device (120), wherein the downlink TDD switch signal comprises a first downlink switch signal and a second downlink switch signal.

6. A method which is compatible with transmission of two time division duplex, TDD, switch signals, the method comprising:
providing a remote device, wherein the remote device comprises a logic processing unit receiving a downlink TDD switch signal and a slave computer, wherein the downlink TDD switch signal comprises a first downlink switch signal and a second downlink switch signal, wherein a type of the first downlink switch signal is different from a type of the second downlink switch signal;
performing (220) a power-on detection on the downlink TDD switch signal by the slave computer;
in the case of a successful power-on detection, generating (230) a standard switch signal corresponding to the downlink TDD switch signal by the slave computer;
comparing (240) the downlink TDD switch signal with the standard switch signal by the logic processing unit; and
in the case that the number of abnormal values between the downlink TDD switch signal and the standard switch signal is less than a set value N, outputting (250) a first downlink switching signal, a first uplink switching signal, a second downlink switching signal, and a second uplink switching signal related to the downlink TDD switch signal by the logic processing unit,
wherein performing a power-on detection on the downlink TDD switch signal by the slave computer further comprises:
receiving (221) a plurality of downlink TDD switch signals in a first sampling period as a plurality of test downlink TDD switch signals;
determining (222) whether numbers of transition edges of the plurality of test downlink TDD switch signals are equal to each other, and in the case that the numbers of transition edges are equal, generating a signal average value of the plurality of test downlink TDD switch signals, wherein each test downlink TDD switch signal comprises several high-levels and several low-levels, and the signal average value is a set of average values of all high-levels and low-levels in corresponding positions of the plurality of test downlink TDD switch signals;
determining (223) whether a first difference between each test downlink TDD switch signal and the signal average value is lower than a first threshold;
in the case that each first difference between each test downlink TDD switch signal and the signal average value is lower than the first threshold, determining (224) that the power-on detection is successful,
wherein generating the standard switch signal corresponding to the downlink TDD switch signal by the slave computer further comprises:
using the signal average value as the standard switch signal,
wherein comparing the downlink TDD switch signal with the standard switch signal by the logic processing unit further comprises:
determining whether a number of all transition edges of the downlink TDD switch signal in a second sampling period is equal to a number of all transition edges of the standard switch signal, and if not, recording that there is one abnormal value in the downlink TDD switch signal, wherein the second sampling period and the first sampling period have a same duration;
determining whether a plurality of second differences between each high-level and each low-level of the downlink TDD switch signal in the second sampling period and the corresponding high-level and low-level of the standard switch signal exceed a second threshold value, if the second difference exceeds the second threshold value, recording that there is one abnormal value in the downlink TDD switch signal.

7. The method according to claim 6, wherein in the case that a number of abnormal values between the downlink TDD switch signal and the standard switch signal is less than a set value of N, outputting the first downlink switching signal, the first uplink switching signal, the second downlink switching signal, and the second uplink switching signal by the logic processing unit further comprises:
in the case that the number of abnormal values between the downlink TDD switch signal and the standard switch signal is zero, directly outputting the downlink TDD switch signal as a downlink switching signal; or
in the case that the number of abnormal values between the downlink TDD switch signal and the standard switch signal is not zero, but less than the set value N, outputting the standard switch signal as the downlink switching signal.

8. The method according to claim 7, wherein outputting the first downlink switching signal, the first uplink switching signal, the second downlink switching signal, and the second uplink switching signal by the logic processing unit further comprises:
recovering the uplink switching signal according to the downlink switching signal;
performing operations of a delayed turning-on and a prior turning-off on outputs of the uplink switching signal and the corresponding downlink switching signal.

9. The method according to claim 8, wherein outputting the first downlink switching signal, the first uplink switching signal, the second downlink switching signal, and the second uplink switching signal by the logic processing unit further comprises:
in the case that the downlink TDD switch signal further comprises an identification signal, outputting the first downlink switching signal and the second downlink switching signal of the downlink switching signal distinguishingly according to the identification signal.

## Patentansprüche

1. Ein Ferngerät (120), das mit der Übertragung von zwei Zeitduplex-TDD-Schaltsignalen kompatibel ist, wobei das Ferngerät (120) umfasst: eine Logikverarbeitungseinheit (121) und einen Slave-Computer (122),
wobei die Logikverarbeitungseinheit (121) so konfiguriert ist, dass sie ein Downlink-TDD-Umschaltsignal empfängt, wobei das Downlink-TDD-Umschaltsignal ein erstes Downlink-Umschaltsignal und ein zweites Downlink-Umschaltsignal umfasst, wobei sich ein Typ des ersten Downlink-Umschaltsignals von einem Typ des zweiten Downlink-Umschaltsignals unterscheidet;
der Slave-Computer (122) ist so konfiguriert, dass er:
eine Einschaltdetektion für das Downlink-TDD-Umschaltsignal durchführt;
im Falle einer erfolgreichen Einschaltdetektion ein Standard-Umschaltsignal erzeugt, das dem Downlink-TDD-Umschaltsignal entspricht;
die Logikverarbeitungseinheit (121) ist ferner so konfiguriert, dass sie:
empfangen von Informationen, die die erfolgreiche Einschaltdetektion und das Standard-Schaltsignal anzeigen;
vergleichen des Downlink-TDD-Schaltsignals mit dem Standard-Schaltsignal;
wenn die Anzahl der abnormalen Werte zwischen dem Downlink-TDD-Umschaltsignal und dem Standard-Umschaltsignal kleiner als ein festgelegter Wert N ist, werden ein erstes Downlink-Umschaltsignal und ein erstes Uplink-Umschaltsignal, ein zweites Downlink-Umschaltsignal und ein zweites Uplink-Umschaltsignal in Bezug auf das Downlink-TDD-Umschaltsignal ausgegeben,
wobei der Slave-Computer ferner so konfiguriert ist, dass er:
eine Vielzahl der Downlink-TDD-Umschaltsignale in einer ersten Abtastperiode als eine Vielzahl von Test-Downlink-TDD-Umschaltsignalen empfängt;
feststellen, ob die Anzahl der Übergangsflanken der mehreren Test-Downlink-TDD-Umschaltsignale gleich sind, und für den Fall, dass die Anzahl der Übergangsflanken gleich ist, einen Signalmittelwert der mehreren Test-Downlink-TDD-Umschaltsignale erzeugen, wobei jedes Test-Downlink-TDD-Schaltsignal mehrere hohe Pegel und mehrere niedrige Pegel umfasst und der Signalmittelwert ein Satz von Mittelwerten aller hohen Pegel und niedrigen Pegel an entsprechenden Positionen der mehreren Test-Downlink-TDD-Schaltsignale ist;
bestimmen, ob eine erste Differenz zwischen jedem Test-Downlink-TDD-Schaltsignal und dem Signalmittelwert unter einem ersten Schwellenwert liegt;
falls jede erste Differenz zwischen jedem Test-Downlink-TDD-Schaltsignal und dem Signalmittelwert unter dem ersten Schwellenwert liegt, Bestimmen, dass die Einschaltdetektion erfolgreich ist,
wobei, wenn die Einschalt-Erkennung erfolgreich ist, der Slave-Computer ferner so konfiguriert ist, dass er:
den Signalmittelwert als Standard-Schaltsignal verwendet,
wobei die Logikverarbeitungseinheit ferner so konfiguriert ist, dass sie:
bestimmen, ob eine Anzahl aller Übergangsflanken des Downlink-TDD-Schaltsignals in einer zweiten Abtastperiode gleich einer Anzahl aller Übergangsflanken des Standard-Schaltsignals ist, und wenn nicht, Aufzeichnen, dass ein abnormaler Wert im Downlink-TDD-Schaltsignal vorhanden ist, wobei die zweite Abtastperiode und die erste Abtastperiode die gleiche Dauer haben;
bestimmen, ob eine Vielzahl von zweiten Differenzen zwischen jedem hohen Pegel und jedem niedrigen Pegel des Downlink-TDD-Umschaltsignals in der zweiten Abtastperiode und dem entsprechenden hohen Pegel und niedrigen Pegel des Standard-Umschaltsignals einen zweiten Schwellenwert überschreiten, wenn die zweite Differenz den zweiten Schwellenwert überschreitet, Aufzeichnen, dass ein abnormaler Wert im Downlink-TDD-Umschaltsignal vorhanden ist.

2. Das Ferngerät gemäß Anspruch 1, wobei die Logikverarbeitungseinheit ferner so konfiguriert ist, dass sie:
in dem Fall, dass die Anzahl der abnormalen Werte zwischen dem Downlink-TDD-Umschaltsignal und dem Standard-Umschaltsignal Null ist, das Downlink-TDD-Umschaltsignal direkt als Downlink-Umschaltsignal ausgibt; oder
falls die Anzahl der abnormalen Werte zwischen dem Downlink-TDD-Umschaltsignal und dem Standard-Umschaltsignal nicht Null, sondern kleiner als der eingestellte Wert N ist, wird das Standard-Umschaltsignal als Downlink-Umschaltsignal ausgegeben.

3. Das Ferngerät gemäß Anspruch 2, wobei die Logikverarbeitungseinheit ferner so konfiguriert ist, dass sie:
ein Uplink-Schaltsignal gemäß dem Downlink-Schaltsignal wiederherstellt;
Operationen eines verzögerten Einschaltens und eines vorzeitigen Ausschaltens an den Ausgängen des Uplink-Schaltsignals und des entsprechenden Downlink-Schaltsignals durchführt.

4. Das Ferngerät gemäß Anspruch 3, wobei die Logikverarbeitungseinheit ferner so konfiguriert ist, dass sie:
für den Fall, dass das Downlink-TDD-Umschaltsignal ferner ein Identifikationssignal umfasst, das erste Downlink-Umschaltsignal und das zweite Downlink-Umschaltsignal des Downlink-Umschaltsignals entsprechend dem Identifikationssignal unterscheidbar ausgibt.

5. Ein System zur Übertragung, das mit zwei Zeitduplex-TDD-Schaltsignalen kompatibel ist, wobei das System umfasst:
ein entferntes Gerät (120) gemäß einem der Ansprüche 1 bis 4; und
ein nahes Gerät (110), das ein Downlink-TDD-Schaltsignal an das entfernte Gerät (120) sendet, wobei das Downlink-TDD-Schaltsignal ein erstes Downlink-Schaltsignal und ein zweites Downlink-Schaltsignal umfasst.

6. Ein Verfahren, das mit der Übertragung von zwei Zeitduplex-Schaltsignalen (TDD) kompatibel ist, wobei das Verfahren umfasst:
Bereitstellen einer Fernvorrichtung, wobei die Fernvorrichtung eine Logikverarbeitungseinheit, die ein Downlink-TDD-Schaltsignal empfängt, und einen Slave-Computer umfasst, wobei das Downlink-TDD-Schaltsignal ein erstes Downlink-Schaltsignal und ein zweites Downlink-Schaltsignal umfasst, wobei sich ein Typ des ersten Downlink-Schaltsignals von einem Typ des zweiten Downlink-Schaltsignals unterscheidet;
Durchführen (220) einer Einschaltdetektion für das Downlink-TDD-Schaltsignal durch den Slave-Computer;
im Falle einer erfolgreichen Einschaltdetektion Erzeugen (230) eines Standard-Schaltsignals, das dem Downlink-TDD-Schaltsignal entspricht, durch den Slave-Computer;
Vergleichen (240) des Downlink-TDD-Schaltsignals mit dem Standard-Schaltsignal durch die Logikverarbeitungseinheit; und
falls die Anzahl der abnormalen Werte zwischen dem Downlink-TDD-Umschaltsignal und dem Standard-Umschaltsignal kleiner als ein festgelegter Wert N ist, Ausgeben (250) eines ersten Downlink-Umschaltsignals, eines ersten Uplink-Umschaltsignals, eines zweiten Downlink-Umschaltsignals und eines zweiten Uplink-Umschaltsignals in Bezug auf das Downlink-TDD-Umschaltsignal durch die Logikverarbeitungseinheit,
wobei die Durchführung einer Einschaltdetektion für das Downlink-TDD-Umschaltsignal durch den Slave-Computer ferner umfasst:
Empfangen (221) einer Vielzahl von Downlink-TDD-Umschaltsignalen in einer ersten Abtastperiode als eine Vielzahl von Test-Downlink-TDD-Umschaltsignalen;
Bestimmen (222), ob die Anzahl der Übergangsflanken der mehreren Test-Downlink-TDD-Schaltsignale gleich sind, und für den Fall, dass die Anzahl der Übergangsflanken gleich ist, Erzeugen eines Signalmittelwerts der mehreren Test-Downlink-TDD-Schaltsignale, wobei jedes Test-Downlink-TDD-Schaltsignal mehrere Hochpegel und mehrere Tiefpegel umfasst, und der Signalmittelwert eine Menge von Mittelwerten aller hohen Pegel und niedrigen Pegel an entsprechenden Positionen der mehreren Test-Downlink-TDD-Schaltsignale ist;
Bestimmen (223), ob eine erste Differenz zwischen jedem Test-Downlink-TDD-Schaltsignal und dem Signalmittelwert kleiner als ein erster Schwellenwert ist;
in dem Fall, dass jede erste Differenz zwischen jedem Test-Downlink-TDD-Schaltsignal und dem Signalmittelwert kleiner als der erste Schwellenwert ist, Bestimmen (224), dass die Einschaltdetektion erfolgreich ist,
wobei das Erzeugen des dem Downlink-TDD-Schaltsignal entsprechenden Standard-Schaltsignals durch den Slave-Computer ferner umfasst:
Verwenden des Signalmittelwerts als Standard-Schaltsignal,
wobei das Vergleichen des Downlink-TDD-Schaltsignals mit dem Standard-Schaltsignal durch die Logikverarbeitungseinheit ferner umfasst:
Bestimmen, ob eine Anzahl aller Übergangsflanken des Downlink-TDD-Schaltsignals in einer zweiten Abtastperiode gleich einer Anzahl aller Übergangsflanken des Standard-Schaltsignals ist, und wenn nicht, Aufzeichnen, dass ein abnormaler Wert im Downlink-TDD-Schaltsignal vorhanden ist, wobei die zweite Abtastperiode und die erste Abtastperiode die gleiche Dauer haben;
Bestimmen, ob eine Vielzahl von zweiten Differenzen zwischen jedem hohen Pegel und jedem niedrigen Pegel des Downlink-TDD-Schaltsignals in der zweiten Abtastperiode und dem entsprechenden hohen Pegel und niedrigen Pegel des Standard-Schaltsignals einen zweiten Schwellenwert überschreiten, und wenn die zweite Differenz den zweiten Schwellenwert überschreitet, Aufzeichnen, dass ein abnormaler Wert im Downlink-TDD-Schaltsignal vorhanden ist.

7. Das Verfahren gemäß Anspruch 6, wobei in dem Fall, dass eine Anzahl von abnormalen Werten zwischen dem Downlink-TDD-Umschaltsignal und dem Standard-Umschaltsignal kleiner als ein festgelegter Wert von N ist, das Ausgeben des ersten Downlink-Umschaltsignals, des ersten Uplink-Umschaltsignals, des zweiten Downlink-Umschaltsignals und des zweiten Uplink-Umschaltsignals durch die Logikverarbeitungseinheit ferner umfasst:
im Fall, dass die Anzahl der abnormalen Werte zwischen dem Downlink-TDD-Umschaltsignal und dem Standard-Umschaltsignal Null ist, direktes Ausgeben des Downlink-TDD-Umschaltsignals als Downlink-Umschaltsignal; oder
im Fall, dass die Anzahl der abnormalen Werte zwischen dem Downlink-TDD-Umschaltsignal und dem Standard-Umschaltsignal nicht Null, aber kleiner als der festgelegte Wert N ist, Ausgeben des Standard-Umschaltsignals als Downlink-Umschaltsignal.

8. Das Verfahren nach Anspruch 7, wobei das Ausgeben des ersten Downlink-Schaltsignals, des ersten Uplink-Schaltsignals, des zweiten Downlink-Schaltsignals und des zweiten Uplink-Schaltsignals durch die Logikverarbeitungseinheit ferner umfasst:
Wiederherstellen des Uplink-Schaltsignals gemäß dem Downlink-Schaltsignal;
Durchführen von Operationen eines verzögerten Einschaltens und eines vorzeitigen Ausschaltens an Ausgängen des Uplink-Schaltsignals und des entsprechenden Downlink-Schaltsignals.

9. Das Verfahren nach Anspruch 8, wobei das Ausgeben des ersten Downlink-Umschaltsignals, des ersten Uplink-Umschaltsignals, des zweiten Downlink-Umschaltsignals und des zweiten Uplink-Umschaltsignals durch die Logikverarbeitungseinheit ferner umfasst:
in dem Fall, dass das Downlink-TDD-Umschaltsignal ferner ein Identifikationssignal umfasst, das Ausgeben des ersten Downlink-Umschaltsignals und des zweiten Downlink-Umschaltsignals des Downlink-Umschaltsignals unterscheidbar gemäß dem Identifikationssignal.

## Revendications

1. Dispositif distant (120) compatible avec la transmission de deux signaux de commutation TDD (Time Division Duplex), le dispositif distant (120) comprenant : une unité de traitement logique (121) et un ordinateur esclave (122),
l'unité de traitement logique (121) étant configurée pour recevoir un signal de commutation TDD de liaison descendante, dans lequel le signal de commutation TDD de liaison descendante comprend un premier signal de commutation de liaison descendante et un deuxième signal de commutation de liaison descendante, dans lequel un type du premier signal de commutation de liaison descendante est différent d'un type du deuxième signal de commutation de liaison descendante ;
l'ordinateur esclave (122) étant configuré pour :
effectuer une détection de mise sous tension sur le signal de commutation TDD de liaison descendante ;
dans le cas d'une détection de mise sous tension réussie, générer un signal de commutation standard correspondant au signal de commutation TDD de liaison descendante ;
l'unité de traitement logique (121) étant en outre configurée pour :
recevoir des informations indiquant la détection réussie de la mise sous tension et le signal de commutation standard ;
comparer le signal de commutation TDD descendant avec le signal de commutation standard ;
dans le cas où le nombre de valeurs anormales entre le signal de commutation TDD descendant et le signal de commutation standard est inférieur à une valeur définie N, émettre un premier signal de commutation descendant et un premier signal de commutation ascendant, un deuxième signal de commutation descendant et un deuxième signal de commutation ascendant liés au signal de commutation TDD descendant,
dans lequel l'ordinateur esclave est en outre configuré pour :
recevoir une pluralité de signaux de commutation TDD de liaison descendante dans une première période d'échantillonnage en tant que pluralité de signaux de commutation TDD de liaison descendante de test ;
déterminer si les nombres de fronts de transition de la pluralité de signaux de commutation TDD de liaison descendante de test sont égaux les uns aux autres, et dans le cas où les nombres de fronts de transition sont égaux, générer une valeur moyenne de signal de la pluralité de signaux de commutation TDD de liaison descendante de test, dans laquelle chaque signal de commutation TDD de liaison descendante de test comprend plusieurs niveaux hauts et plusieurs niveaux bas, et la valeur moyenne du signal est un ensemble de valeurs moyennes de tous les niveaux élevés et de tous les niveaux bas dans les positions correspondantes de la pluralité de signaux de commutation TDD de liaison descendante de test ;
déterminer si une première différence entre chaque signal de commutation TDD de liaison descendante de test et la valeur moyenne du signal est inférieure à un premier seuil ;
dans le cas où chaque première différence entre chaque signal de commutation TDD de liaison descendante de test et la valeur moyenne du signal est inférieure au premier seuil, déterminer que la détection de mise sous tension est réussie,
dans lequel, si la détection de mise sous tension est réussie, l'ordinateur esclave est en outre configuré pour :
utiliser la valeur moyenne du signal comme signal de commutation standard,
dans lequel l'unité de traitement logique est en outre configurée pour :
déterminer si un nombre de toutes les tranches de transition du signal de commutation TDD de liaison descendante dans une deuxième période d'échantillonnage est égal à un nombre de toutes les tranches de transition du signal de commutation standard, et si ce n'est pas le cas, enregistrer qu'il y a une valeur anormale dans le signal de commutation TDD de liaison descendante, dans lequel la deuxième période d'échantillonnage et la première période d'échantillonnage ont une même durée ;
déterminer si une pluralité de secondes différences entre chaque niveau haut et chaque niveau bas du signal de commutation TDD de liaison descendante dans la deuxième période d'échantillonnage et le niveau haut et le niveau bas correspondants du signal de commutation standard dépassent une deuxième valeur seuil, si la deuxième différence dépasse la deuxième valeur seuil, enregistrer qu'il y a une valeur anormale dans le signal de commutation TDD de liaison descendante.

2. Le dispositif distant selon la revendication 1, dans lequel l'unité de traitement logique est en outre configurée pour :
dans le cas où le nombre de valeurs anormales entre le signal de commutation TDD descendant et le signal de commutation standard est égal à zéro, émettre directement le signal de commutation TDD descendant en tant que signal de commutation descendant ; ou
dans le cas où le nombre de valeurs anormales entre le signal de commutation TDD descendant et le signal de commutation standard n'est pas égal à zéro, mais inférieur à la valeur définie N, émettre le signal de commutation standard en tant que signal de commutation descendant.

3. Dispositif distant selon la revendication 2, dans lequel l'unité de traitement logique est en outre configurée pour :
récupérer un signal de commutation de liaison montante en fonction du signal de commutation de liaison descendante ;
effectuer des opérations d'activation retardée et de désactivation préalable sur les sorties du signal de commutation de liaison montante et du signal de commutation de liaison descendante correspondant.

4. Dispositif distant selon la revendication 3, dans lequel l'unité de traitement logique est en outre configurée pour :
dans le cas où le signal de commutation TDD de liaison descendante comprend en outre un signal d'identification, émettre le premier signal de commutation de liaison descendante et le deuxième signal de commutation de liaison descendante du signal de commutation de liaison descendante de manière distincte en fonction du signal d'identification.

5. Système de transmission compatible avec deux signaux de commutation en duplex à répartition dans le temps (TDD), le système comprenant :
un dispositif distant (120) selon l'une quelconque des revendications 1 à 4 ; et
un dispositif proche (110) envoyant un signal de commutation TDD descendant au dispositif distant (120), dans lequel le signal de commutation TDD descendant comprend un premier signal de commutation descendant et un deuxième signal de commutation descendant.

6. Procédé compatible avec la transmission de deux signaux de commutation en duplex à répartition dans le temps (TDD), le procédé comprenant :
la fourniture d'un dispositif distant, dans lequel le dispositif distant comprend une unité de traitement logique recevant un signal de commutation TDD descendant et un ordinateur esclave, dans lequel le signal de commutation TDD descendant comprend un premier signal de commutation descendant et un deuxième signal de commutation descendant, dans lequel un type du premier signal de commutation descendant est différent d'un type du deuxième signal de commutation descendant ;
effectuer (220) une détection de mise sous tension sur le signal de commutation TDD de liaison descendante par l'ordinateur esclave ;
dans le cas d'une détection de mise sous tension réussie, générer (230) un signal de commutation standard correspondant au signal de commutation TDD de liaison descendante par l'ordinateur esclave ;
comparer (240) le signal de commutation TDD de liaison descendante avec le signal de commutation standard par l'unité de traitement logique ; et
dans le cas où le nombre de valeurs anormales entre le signal de commutation TDD descendant et le signal de commutation standard est inférieur à une valeur définie N, émettre (250) un premier signal de commutation descendant, un premier signal de commutation montant, un deuxième signal de commutation descendant et un deuxième signal de commutation montant liés au signal de commutation TDD descendant par l'unité de traitement logique,
dans lequel la détection de mise sous tension du signal de commutation TDD de liaison descendante par l'ordinateur esclave comprend en outre :
la réception (221) d'une pluralité de signaux de commutation TDD de liaison descendante dans une première période d'échantillonnage en tant que pluralité de signaux de commutation TDD de liaison descendante de test ;
déterminer (222) si les nombres de fronts de transition de la pluralité de signaux de commutation TDD de liaison descendante de test sont égaux les uns aux autres, et dans le cas où les nombres de fronts de transition sont égaux, générer une valeur moyenne de signal de la pluralité de signaux de commutation TDD de liaison descendante de test, dans lequel chaque signal de commutation TDD de liaison descendante de test comprend plusieurs niveaux hauts et plusieurs niveaux bas, et la valeur moyenne du signal est un ensemble de valeurs moyennes de tous les niveaux élevés et de tous les niveaux bas dans des positions correspondantes de la pluralité de signaux de commutation TDD de liaison descendante de test ;
déterminer (223) si une première différence entre chaque signal de commutation TDD de liaison descendante testé et la valeur moyenne du signal est inférieure à un premier seuil ;
dans le cas où chaque première différence entre chaque signal de commutation TDD de liaison descendante testé et la valeur moyenne du signal est inférieure au premier seuil, déterminer (224) que la détection de mise sous tension est réussie,
dans lequel la génération du signal de commutation standard correspondant au signal de commutation TDD de liaison descendante par l'ordinateur esclave comprend en outre :
l'utilisation de la valeur moyenne du signal comme signal de commutation standard,
dans lequel la comparaison du signal de commutation TDD de liaison descendante avec le signal de commutation standard par l'unité de traitement logique comprend en outre :
déterminer si un nombre de toutes les arêtes de transition du signal de commutation TDD de liaison descendante dans une deuxième période d'échantillonnage est égal à un nombre de toutes les arêtes de transition du signal de commutation standard, et si ce n'est pas le cas, enregistrer qu'il existe une valeur anormale dans le signal de commutation TDD de liaison descendante, dans lequel la deuxième période d'échantillonnage et la première période d'échantillonnage ont une même durée ;
déterminer si une pluralité de secondes différences entre chaque niveau haut et chaque niveau bas du signal de commutation TDD de liaison descendante dans la deuxième période d'échantillonnage et le niveau haut et le niveau bas correspondants du signal de commutation standard dépassent une deuxième valeur seuil, si la deuxième différence dépasse la deuxième valeur seuil, enregistrer qu'il y a une valeur anormale dans le signal de commutation TDD de liaison descendante.

7. Procédé selon la revendication 6, dans lequel, dans le cas où un nombre de valeurs anormales entre le signal de commutation TDD de liaison descendante et le signal de commutation standard est inférieur à une valeur définie N, la sortie du premier signal de commutation de liaison descendante, du premier signal de commutation de liaison montante, du deuxième signal de commutation de liaison descendante et du deuxième signal de commutation de liaison montante par l'unité de traitement logique comprend en outre :
dans le cas où le nombre de valeurs anormales entre le signal de commutation TDD de liaison descendante et le signal de commutation standard est égal à zéro, la sortie directe du signal de commutation TDD de liaison descendante en tant que signal de commutation de liaison descendante ; ou
dans le cas où le nombre de valeurs anormales entre le signal de commutation TDD de liaison descendante et le signal de commutation standard n'est pas égal à zéro, mais inférieur à la valeur prédéfinie N, la sortie du signal de commutation standard en tant que signal de commutation de liaison descendante.

8. Procédé selon la revendication 7, dans lequel la sortie du premier signal de commutation de liaison descendante, du premier signal de commutation de liaison montante, du deuxième signal de commutation de liaison descendante et du deuxième signal de commutation de liaison montante par l'unité de traitement logique comprend en outre :
la récupération du signal de commutation de liaison montante en fonction du signal de commutation de liaison descendante ;
la réalisation d'opérations d'activation retardée et de désactivation préalable sur les sorties du signal de commutation de liaison montante et du signal de commutation de liaison descendante correspondant.

9. Procédé selon la revendication 8, dans lequel la sortie du premier signal de commutation de liaison descendante, du premier signal de commutation de liaison montante, du deuxième signal de commutation de liaison descendante et du deuxième signal de commutation de liaison montante par l'unité de traitement logique comprend en outre :
dans le cas où le signal de commutation TDD de liaison descendante comprend en outre un signal d'identification, la sortie du premier signal de commutation de liaison descendante et du deuxième signal de commutation de liaison descendante du signal de commutation de liaison descendante de manière distinctive en fonction du signal d'identification.
